# EUROPEAN PATENT SPECIFICATION

(11) **EP 4 409 781 B1**
(45) Date of publication and mention of the grant of the patent: **03.09.2025**
(21) Application number: 22777739.8
(22) Date of filing: 14.09.2022
(51) Int. Cl.: H04J 3/12, H04J 3/06

(54) **PROTOCOL FOR INCREASED ACCURACY TIME STAMPING INTERWORKING ON HIGH SPEED ETHERNET LINKS**
PROTOKOLL FÜR ERHÖHTE GENAUIGKEIT ZEITSTEMPELN ZUSAMMENARBEITEN AUF HOCHGESCHWINDIGKEITS-ETHERNET-VERBINDUNGEN
PROTOCOLE D'INTERFONCTIONNEMENT D'HORODATAGE A PRECISION ACCRUE SUR DES LIAISONS ETHERNET HAUTE VITESSE

(30) Priority: 27.09.2021 US 202163248642 P; 28.01.2022 US 202263304400 P
(43) Date of publication of application: 07.08.2024
(73) Proprietor: Telefonaktiebolaget LM Ericsson (publ), 164 83 Stockholm (SE)
(72) Inventor: JOHANSSON, Mikael, 171 71 SOLNA (SE); PARKHOLM, Ulf, 741 92 KNIVSTA (SE)
(74) Representative: Ericsson
(86) International application number: PCT/SE2022/050811
(87) International publication number: WO 2023/048614

(56) References cited:
- SCHEFFENEGGER NETAPP R ET AL: "Additional negotiation in the TCP Timestamp Option field during the TCP handshake; draft-scheffenegger-tcpm-timestamp-negotiation-05.txt", ADDITIONAL NEGOTIATION IN THE TCP TIMESTAMP OPTION FIELD DURING THE TCP HANDSHAKE; DRAFT-SCHEFFENEGGER-TCPM-TIMESTAMP-NEGOTIATION-05.TXT, INTERNET ENGINEERING TASK FORCE, IETF; STANDARDWORKINGDRAFT, INTERNET SOCIETY (ISOC) 4, RUE DES FALAISES CH- 120, 22 October 2012 (2012-10-22), pages 1 - 29, XP015084570
- CALDER B R ET AL: "Ultraprecise Absolute Time Synchronization for Distributed Acquisition Systems", IEEE JOURNAL OF OCEANIC ENGINEERING, IEEE SERVICE CENTER, PISCATAWAY, NJ, US, vol. 32, no. 4, 1 October 2007 (2007-10-01), pages 772 - 785, XP011203624, ISSN: 0364-9059
- PAOLO FERRARI ET AL: "Experimental Characterization of Uncertainty Sources in a Software-Only Synchronization System", IEEE TRANSACTIONS ON INSTRUMENTATION AND MEASUREMENT, IEEE, USA, vol. 61, no. 5, 1 May 2012 (2012-05-01), pages 1512 - 1521, XP011440657, ISSN: 0018-9456, DOI: 10.1109/TIM.2011.2180974

## Description

### TECHNICAL FIELD

The present disclosure relates generally to time stamping for high speed ethernet link communications.

### BACKGROUND

For high speed ethernet interfaces, 25Gbps and above, time stamping of ethernet frames can be operationally complex when high accuracy is needed. To manage Bit Error Ratio IEEE 802.3 uses a Forward Error Correction (FEC) sublayer which may alter the time a frame traverses between a reference plane and a generic Reconciliation Sublayer (gRS) layer where TSSI enables timestamping to be performed. Time stamping delay management has not been considered when the FEC operations were defined in the IEEE 802.3-2018 release.

For high order PHY functions with multi lane are addressed in a task force called IEEE802.3cx and which is scheduled to be settled during autumn 2021.
D1 SCHEFFENEGGER NETAPP R ET AL: "Additional negotiation in the TCP Timestamp Option field during the TCP handshake; draft-schelfenegger-tcpm-timestamp-negotiatio n-05. txt", ADDITIONAL NEGOTIATION IN THE TCP TIMESTAMP OPTION FIELD DURING THE TCP HANDSHAKE; DRAFTSCHEFFENEGGER-TCPM-TIMESTAMP-NEGOTIATION-05. TXT, INTERNET ENGINEERING TASK FORCE, IETF; STANDARDWORKINGDRAFT, INTERNET SOCIETY (ISOC) 4, RUE DES FALAISES CH- 120, 22 October 2012 (2012-10-22), pages 1-29, specifies a backward-compatible method for negotiating for additional capabilities for the Timestamp option for TCP.
D2 CALDER B R ET AL: "Ultraprecise Absolute Time Synchronization for Distributed Acquisition Systems", IEEE JOURNAL OF OCEANIC ENGINEERING, IEEE SERVICE CENTER, PISCATAWAY, NJ, US, vol. 32, no. 4, 1 October 2007 (2007-10-01), pages 772-785, discloses an algorithm built on top of a precision time protocol (PTP) implementation that allows for synchronization, syntonization and absolute time referencing to coordinated universal time (UTC), including the estimation of timestamp uncertainty.
D3 PAOLO FERRARI ET AL: "Experimental Characterization of Uncertainty Sources in a Software-Only Synchronization System", IEEE TRANSACTIONS ON INSTRUMENTATION AND MEASUREMENT, IEEE, USA, vol. 61, no. 5, 1 May 2012 (2012-05-01), pages 1512-1521, discloses that time reference of distributed nodes must be synchronized in order to be able to coordinate the operation or compare the data collected by different nodes.

### SUMMARY

Currently, different ethernet component vendors have implemented time stamping with unique proprietary operations for high speed interfaces. Differences in the proprietary time stamping operations can result in a time stamping error of about 100ns or more when two ethernet network nodes communicate using different time stamping operations.

The invention is defined by independent claims 1 and 3-6. Further details are defined by dependent claims 2 and 7.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 illustrates a system overview of a first network node and a second network node which announce their respective time stamping capabilities through an ethernet network in accordance with some embodiments of inventive concepts;
Figure 2 illustrates OSI reference model layers and further ethernet layers which can be configured to operate in accordance with some embodiments of inventive concepts;
Figure 3 is a table illustrating magnitude of potential timestamp accuracy impairments which can be reduced by operations in accordance with some embodiments of inventive concepts;
Figure 4 illustrates an effect of transcoding on time stamping error which can be reduced by operations in accordance with some embodiments of inventive concepts;
Figure 5 is a block diagram of sending and receiving operational blocks which can be configured to operate in accordance with some embodiments of inventive concepts;
Figure 6 is a block diagram illustrating a wireless communication device or other user equipment (UE) according to some embodiments of inventive concepts;
Figure 7 is a block diagram illustrating a radio access network RAN node (e.g., a base station eNB/gNB) according to some embodiments of inventive concepts;
Figure 8 is a block diagram illustrating a core network CN node (e.g., an AMF node, an SMF node, etc.) according to some embodiments of inventive concepts;
Figures 9-11 illustrate flow charts of operations and associated methods by a first network node according to some embodiments of inventive concepts;
Figure 12 is a block diagram of a communication system in accordance with some embodiments of inventive concepts;
Figure 13 is a block diagram of a user equipment in accordance with some embodiments of inventive concepts
Figure 14 is a block diagram of a network node in accordance with some embodiments of inventive concepts;
Figure 15 is a block diagram of a host computer communicating with a user equipment in accordance with some embodiments of inventive concepts;
Figure 16 is a block diagram of a virtualization environment in accordance with some embodiments of inventive concepts; and
Figure 17 is a block diagram of a host computer communicating via a base station with a user equipment over a partially wireless connection in accordance with some embodiments of inventive concepts.

### DETAILED DESCRIPTION

Some of the embodiments contemplated herein will now be described more fully with reference to the accompanying drawings. Embodiments are provided by way of example to convey the scope of the subject matter to those skilled in the art, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

As explained above, different ethernet component vendors have implemented time stamping with unique proprietary operations for high speed interfaces. Existing network nodes are not adapted to understand from another network node which of numerous differing time stamping has been selected to be used by the other network node, which results in unpredictable time stamping error and can cause time sensitive applications to operationally fail. Examples of time sensitive applications include New Radio (NR) Time Division Duplex (TDD), Long Term Evolution (LTE) TDD, NR Carrier aggregation, LTE carrier aggregation, positioning, etc.

To improve time stamping accuracy and interworking, various embodiments of the present disclosure are directed to a protocol through which a network node announces its time stamping to another network node, and may further negotiate with the other network node which of the respective the time stamping capabilities will be used for interworking and/or to determine the time stamping error which can occur when interworking.

A network node can operate to announce to another network node a list of time stamping capabilities the network node operationally supports, and may further announce which of the time stamping capabilities is selected for use when communicating with the other network node. The time stamping capabilities information can be announced (shared) on a link layer protocol, e.g., a Slow protocol, the PTP protocol, and/or using out-of-band communications. Alternatively or additionally, a network node may be manually configured with the time stamping capabilities of other network nodes at the time of installation.

Some embodiments of the present disclosure are directed to three operational steps: (1) defining time stamping capabilities which are supported; (2) announcing the time stamping capabilities to another network node; and (3) selecting a time stamping capability which can reduce time stamping error when communicating with the other network node.

The time stamping error caused by time stamping incompatibilities between network nodes (also referred to as devices) interoperating may be reduced from 100s of ns to single digit ns. In cases when it is not possible to reduce time stamping error to single digit ns, operations can make nodes aware of the time stamping incompatibilities and/or estimate time stamping error, and which can be used to log an event or alarm indicating to an operator of the network the potential for additional time stamping error caused by incompatible nodes in the network.

The term "network node" broadly refers to any type of device that performs time stamping operations in communications with another network node. Two network nodes may reside on a common semiconductor substrate, a common circuit board, different circuit boards connected through a backplane network, and/or networked devices which are spaced apart by meters, kilometers, or greater distances.

Some embodiments may become particularly important in the near future as IEEE 802.CX becomes implemented and deployed in a larger scale alongside the already installed base of none IEEE 802.3CX implementations, priority implementations based on IEEE 802.3-2018 or IEEE 802.3-2015 with changes for interfaces with FEC sublayers.

Various embodiments of the present disclosure may be performed with Link Layer Discovery Protocol (LLDP). LLDP is a vendor-neutral link layer protocol used by network devices for advertising their identity, capabilities, and neighbors on a local area network based on IEEE 802 technology, principally wired Ethernet. LLDP enables Ethernet network devices to transmit and/or receive descriptive information, and to store such information learned about other devices. For LLDP, TLV and the TLV PTP protocol may be used instead of the Ethernet Synchronization Message Channel (ESMC) protocol or a newly defined protocol. A TLV added to the Link Layer Discovery Protocol may have some advantages over defining a TLV appended to the PTP Announce message. Adding TLV for 40G and 100G the PCS lane distribution and merging can also increase the accuracy. Accordingly, a network node may send an announcement indicating time stamping capabilities of the network node using a TLV added to the LLDP, to another network node.

In some embodiments, the sending 902 of the first announcement to the second network node includes sending the first announcement to the second network node using LLDP.

In some embodiments, sending 902 of the first announcement to the second network node further includes embedding the first announcement in a TLV field attached to a Link Layer Discovery (LLD) message.

In some embodiments, the first announcement embedded in the TLV field is attached to an egress LLD message.

In some embodiments, the first announcement is embedded in a dataField of the TLV field.

In some embodiments, the operations further include receiving from the second network node a LLD message with an attached TLV field providing a second announcement indicating time stamping capabilities of the second network node. The operations also include extracting from the TLV field the second announcement indicating the time stamping capabilities of the second network node. The operations also include generating a new message comprising the second announcement indicating the time stamping capabilities of the second network node. The operations also include forwarding the new message to a third network node.

However, TLV and the TLV PTP protocol may be implemented in any protocol, both current protocol and a newly defined protocol.

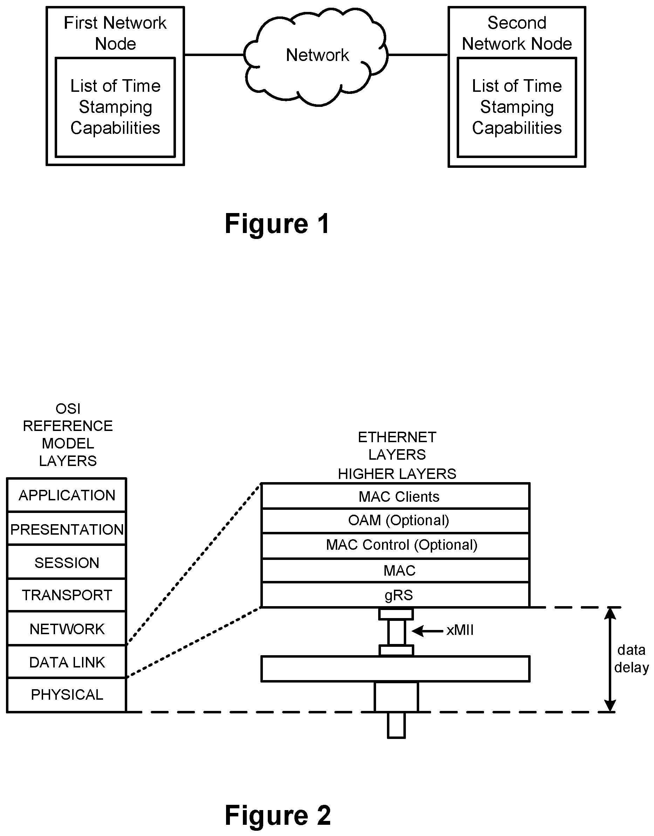

Figure 1 illustrates a system overview of a first network node and a second network node which announce their respective time stamping capabilities through an ethernet network in accordance with some embodiments of inventive concepts.

Potential advantages of enabling a network node to announce its time stamping capabilities to another network node is to negotiate which time stamping operations are used for communications in order to reduce time stamping error and/or to allow estimation of time stamping error that can occur in time stamped communications. Because time stamping operations of network nodes can be implemented in silicon, these operations can be difficult to retroactively change without replacement of hardware components. Therefore, operations that can announce and may further negotiate selection of time stamping capabilities can enable network nodes to be more resilient to interworking with differing time stamping capabilities, enable identification of incompatibilities, and enable estimation of time stamping error which can occur when interworking. Making network nodes aware of each other's time stamping capabilities can enable their time stamping operations to be adapted to reduce time stamping error.

In order to reduce or minimize time stamping error caused by different operations for implementing time stamping of ethernet frames by different network nodes, the network nodes can be configured (adapted) to announce their time stamping capabilities through exchanged information messages. A network node receiving the information message identifying the time stamping capabilities of another network node, may select among its available time stamping capabilities and/or adjust how it performs time stamping when communicating with the other network node so as to reduce or minimize time stamping error.

The network node may inform the other network node which time stamping capability it has selected to use and/or indicate its adaptation of a time stamping capability in an outgoing time stamping capability information message.

The time stamping capabilities of network nodes may be exchanged based on using existing protocols.

The PTP protocol enables a network node to attach additional information to the PTP messages by use of a Type, Length, Value (TLV) field. In accordance with some embodiments, a PTP capable network node uses the TLV field to indicate its time stamping capabilities. The TLV field is adapted to indicate the time stamping capabilities of the PTP network node, and may be attached to all PTP messages or attached to only a subset of PTP messages sent by the PTP network node.

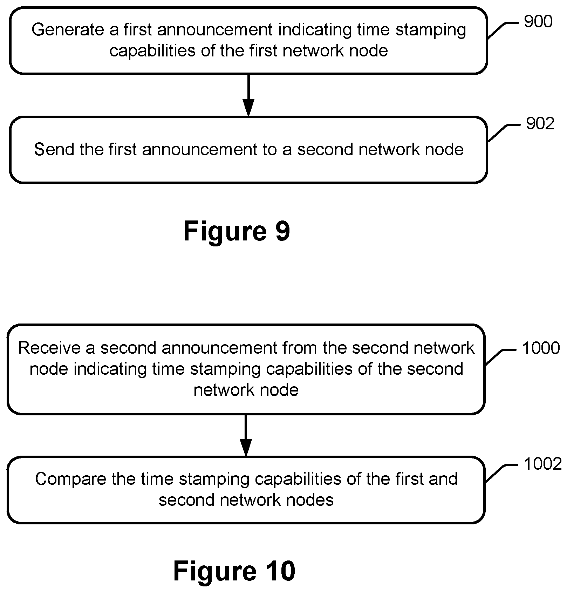

Figure 9 illustrates a flow chart of operations and associated methods by a first network node according to some embodiments of inventive concepts.

Referring to Figure 9, the first network node generates 900 a first announcement indicating time stamping capabilities of the first network node. The first network node sends 902 the first announcement to a second network node.

Figure 10 illustrates a further flow chart of operations and associated methods by the first network node according to some embodiments of inventive concepts.

Referring to Figure 10, the first network node also receives 1000 a second announcement from the second network node indicating time stamping capabilities of the second network node. The first network node compares 1002 the time stamping capabilities of the first and second network nodes.

In some further embodiments, the first network node communicates 1100 with the second network node to negotiate which of the respective time stamping capabilities will be used for time stamping communications between the first and second network nodes based on the comparison 1002.

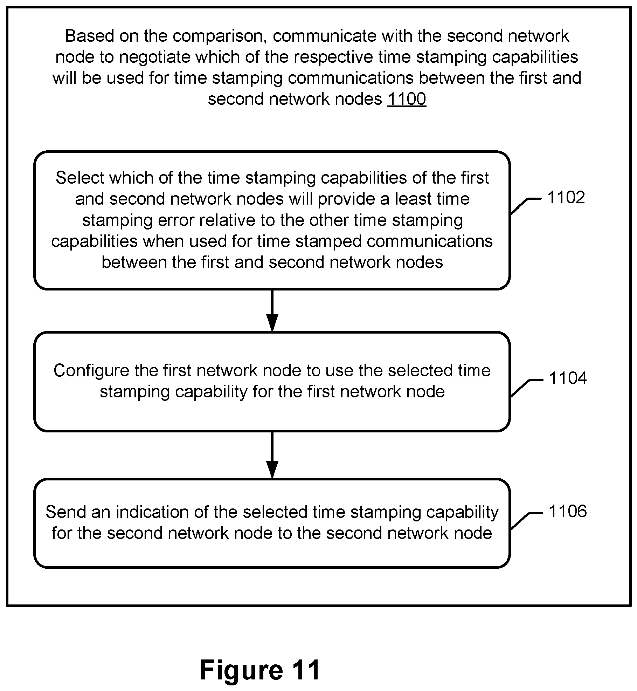

Figure 11 illustrates a flow chart of operations and associated methods by the first network node according to some embodiments of inventive concepts.

Referring to Figure 11, the first network node negotiates which of the respective time stamping capabilities will be used for communications between the first and second network nodes, which includes selecting 1102 which of the time stamping capabilities of the first and second network nodes will provide a least time stamping error relative to the other time stamping capabilities when used for time stamped communications between the first and second network nodes. The negotiation of which of the respective time stamping capabilities will be used for communications between the first and second network nodes, includes configuring 1104 the first network node to use the selected time stamping capability for the first network node. The negotiation further includes sending 1106 an indication of the selected time stamping capability for the second network node to the second network node.

In some further embodiments, the sending 902 of the first announcement to the second network node includes embedding the first announcement in a type, length, value (TLV) field attached to a precision time protocol (PTP) message. The first announcement embedded in the TLV field may be attached to an egress PTP message. Alternatively, the first announcement may be embedded in the dataField of the TLV field.

In some embodiments, the time stamping capabilities indicated in the TLV field received with an incoming PTP message is not forwarded by a first PTP network node, e.g., at least the time stamping capabilities indicated by the TLV field is removed from the incoming PTP message before being forwarded by the first PTP network node. As explained above, the received TLV field indicates the time stamping capabilities of a second PTP network node which sent the incoming PTP message. Thus, in some embodiments, the first PTP network node removes the TLV field from an incoming PTP message before forwarding the modified PTP message to a third PTP network node (e.g., a PTP network node other than the second PTP network node). The modified PTP message therefore does not include an indication of the time stamping capabilities of the second PTP network node which sent the original incoming PTP message.

Accordingly, in some embodiments, the first network node receives 1000 from the second network node a PTP message with an attached TLV field providing a second announcement indicating time stamping capabilities of the second network node. The first network node removes the TLV field from the PTP message, and then forwards the PTP message to a third network node.

In some embodiments, the TLV field indicating time stamping capabilities is only sent between PTP network nodes that are directly connected by an ethernet link. Thus in some embodiments, a PTP network node selectively operates to use a TLV field which it attaches to a PTP message to indicate its time stamping capabilities, based on determining that the PTP message will be communicated using ethernet protocol.

In some embodiments, the operation to embed the first announcement in the TLV field attached to a PTP message includes performing the embedding of the first announcement in the TLV field attached to the PTP message, based on determining that the PTP message will be sent to the second network node using ethernet protocol.

The PTP generates a master-slave relationship among the PTP.

For master ports of a PTP network node that will be sending an egress PTP message toward an ethernet link, the TLV field indicating the time stamping capabilities can be attached to a PTP Announcement message, to a PTP Sync message, a PTP Follow-up message, or a PTP Delay Request message, in accordance with some embodiments. A master port may correspond to a port of a local link of the network node through which the RouterOS will communicate the time stamping capabilities to other ports of one or more other network nodes.

In some corresponding embodiments, responsive to when the first announcement will be sent 902 to the second network node through a master port of the first network node, the first announcement embedded in the TLV field is attached to one of the following: an egress PTP message, a PTP sync message, a PTP follow-up message, or a PTP delay request message.

In some embodiments, for PTP ports in a slave state that will be sending an egress PTP message toward an ethernet link, the TLV field indicating the time stamping capabilities can be attached to a PTP Delay request message. The "master" and "slave" ports may be defined as IEEE 1588-2019/2008.

In some embodiments, responsive to when the first announcement will be sent 902 to the second network node through a slave port of the first network node, the first announcement embedded in the TLV field is attached to a PTP delay request message.

For a PTP network node implementing a peer delay mechanism PTP which will be sending an egress PTP message toward an ethernet link, the TLV field indicating the time stamping capabilities can be attached to a PTP Pdelay_request message, Pdelay_Resp message, or Pdelay_Resp_Follow_Up message, in accordance with some embodiments

In some corresponding embodiments, responsive to when the first announcement will be sent 902 to the second network node through a slave port of the first network node, the first announcement embedded in the TLV field is attached to a PTP delay request message.

In some other embodiments the TLV field indicating the time stamping capabilities is attached to a PTP signaling message.

In some embodiments, operations to generate 900 the first announcement include indicating whether the first network node accounts for physical coding sublayer (PCS) multi-lane distribution when determining time stamping for a message.

In some other embodiments the TLV field indicating the time stamping capabilities is attached to a PTP management message.

In some embodiments, the generating 900 of the first announcement includes indicating whether a transmit path data delay is measured from a beginning of a start frame delimiter.

Alternatively, the time stamping capabilities may be conveyed to another PTP device by use of a new type of ethernet slow protocol.

In some embodiments, the sending 902 of the first announcement to the second network node includes sending the first announcement using an ethernet slow protocol.

Alternatively, the time stamping capabilities may be conveyed to another PTP device by use of a TLV configured to carry the time stamping capability information in the existing slow protocol delivering ESMC messages (specified in ITU-T G.8264 "Distribution of timing information through packet networks")

In some embodiments, the sending 902 of the first announcement to the second network node includes sending the first announcement using an ethernet synchronization message channel (ESMC) protocol data unit (PDU).

Figure 2 illustrates OSI reference model layers and further ethernet layers which can be configured to operate in accordance with some embodiments of inventive concepts. The TimeSync capability requires measurement of data delay in the transmit and receive paths, as shown in Figure 2. The transmit path data delay is measured from the beginning of the SFD at the xMII input to the beginning of the SFD at the MDI output. The receive path data delay is measured from the beginning of the SFD at the MDI input to the beginning of the SFD at the xMII output.

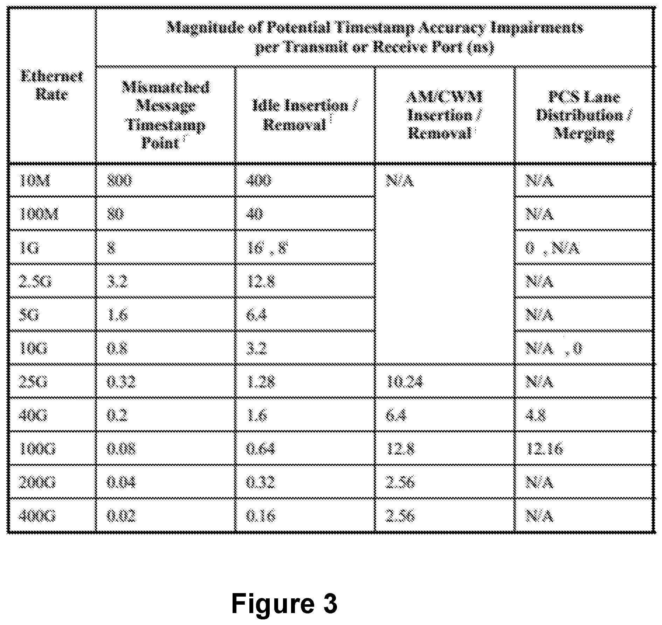

Figure 3 is a table illustrating magnitude of potential timestamp accuracy impairments which can be reduced by operations in accordance with some embodiments of inventive concepts. In Figure 3, the ethernet rate is the data transfer rate over ethernet. The mismatched message timestamp point advertises that the network node supports using a timestamping point at the last bit of a message preamble or at a first bit of the message payload. The values shown only account for the time between the two message timestamp point options when they are adjacent. The idle insertion/removal may advertise rate compensation. Idle compensation will inject idle packets between payload packets to maintain line rates. The IEEE 802.3 standards have not specified whether the idle packets should be inserted before or after a time stamping point has been inserted into the message. The values shown correspond to the effect of a single idle insertion/removal. The path data delay of a TimeSync message is only affected when the message coincides with an alignment marker (AM), code word marker (CWM), or Idle insertion/removal event.

In some embodiments, the first announcement includes indicating whether the first network node supports inserting a time stamping point into a message before or after insertion of any idle packets into the message for rate compensation.

In some embodiments, the generating 900 of the first announcement includes indicating where the first network node inserted an AM for forward error correction (FEC) of a message.

In some embodiments, the generating 900 of the first announcement includes indicating whether the first network node accounts for removal of an AM from a message when determining a location of a time stamping point in the message.

In some embodiments, the generating 900 of the first announcement includes indicating whether the first network node accounts for physical coding sublayer (PCS) multi-lane distribution when determining time stamping for a message.

The AM/CWM insertion/removal moves the marker which shifts the data.

The physical coding sublayer (PCS) lane distribution/merging can advertise whether the network node is taking multilane into consideration when performing time stamping.

The following table illustrates the PTP organization specific TLV.

| Bits | | | | | | | | Octets | TLV offset |
|---|---|---|---|---|---|---|---|---|---|
| 7 | 6 | 5 | 4 | 3 | 2 | 1 | 0 | | |
| tlvType | | | | | | | | 2 | 0 |
| lengthFireld | | | | | | | | 2 | 2 |
| organizationId | | | | | | | | 3 | 4 |
| organizationSubType | | | | | | | | 3 | 7 |
| dataField | | | | | | | | N | 10 |

In some example embodiments, time stamping capabilities of a network node can be indicated through use of an organization specific TLV using one or more of the groups of bits shown in the above table.

The TLV can be attached to any PTP message, and for this example it is attached to the PTP announce message. The time stamping capabilities may be contained in the dataField illustrated in the following Table. The following table illustrates the PTP organization specific TLV dataField description.

| Bits | | | | | | | | | |
|---|---|---|---|---|---|---|---|---|---|
| 7 | 6 | 5 | 4 | 3 | 2 | 1 | 0 | | |
| TimeStamp point 0x01 Start of Frame, 0x02 Start of preamble,... | | | | | | | | 1 | 11 |
| Idle insertion/removal compensation 0x00 No, 0x01 Yes | | | | | | | | 1 | 12 |
| Etc.... | | | | | | | | | |

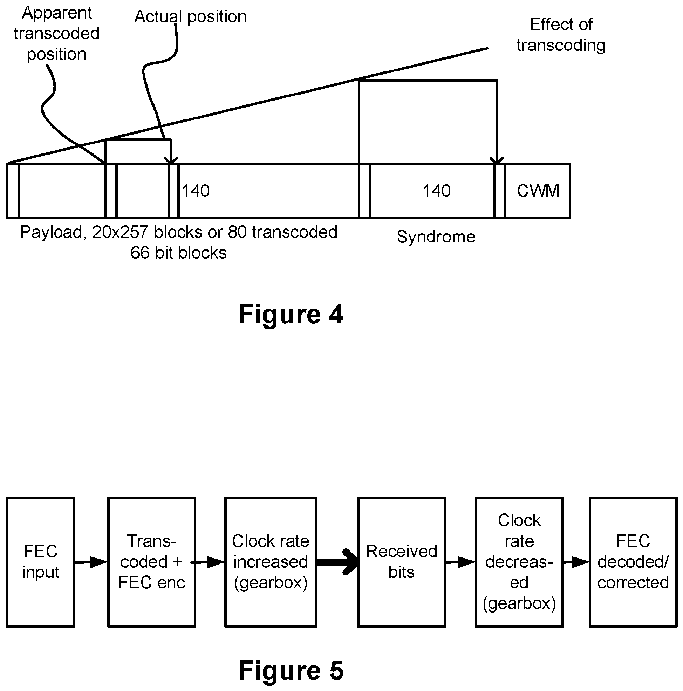

Figure 4 illustrates the effect of accounting or not accounting for the shift of bit position on the receiver or sender side in accordance with some embodiments of inventive concepts. There is a difference in receive time if transcoding is included. This is then exemplified with the start of packet in three different locations illustrated by the spacing between the apparent and actual transcoded positions.

Figure 5 is a block diagram of sending (TX) and receiving (RX) operational blocks which can be configured to operate in accordance with some embodiments of inventive concepts. In the condition the TX and RX operational blocks are locked the effect of the above transcoding is cancelled because RX and TX process is the same with exception of sign. A problem can arise if one of the RX or TX operational blocks implements according to Clause 90.7 of IEEE 802.3 and the other one of the RX or TX operational blocks implements according to Clause 90.7 IEEE 802.3-2018.

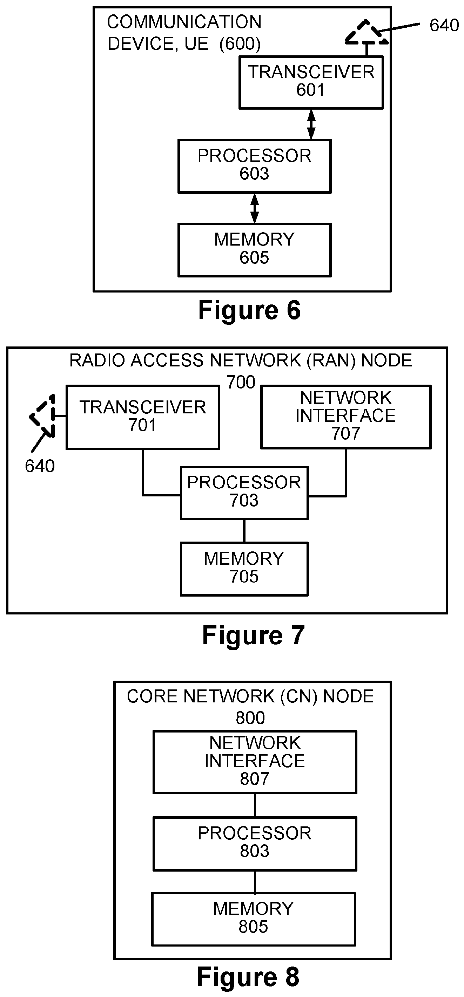

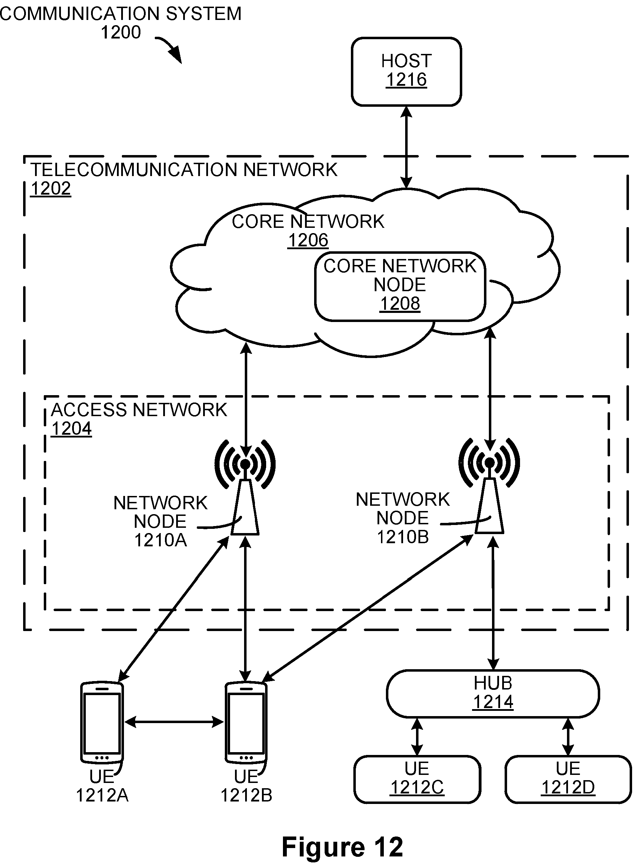

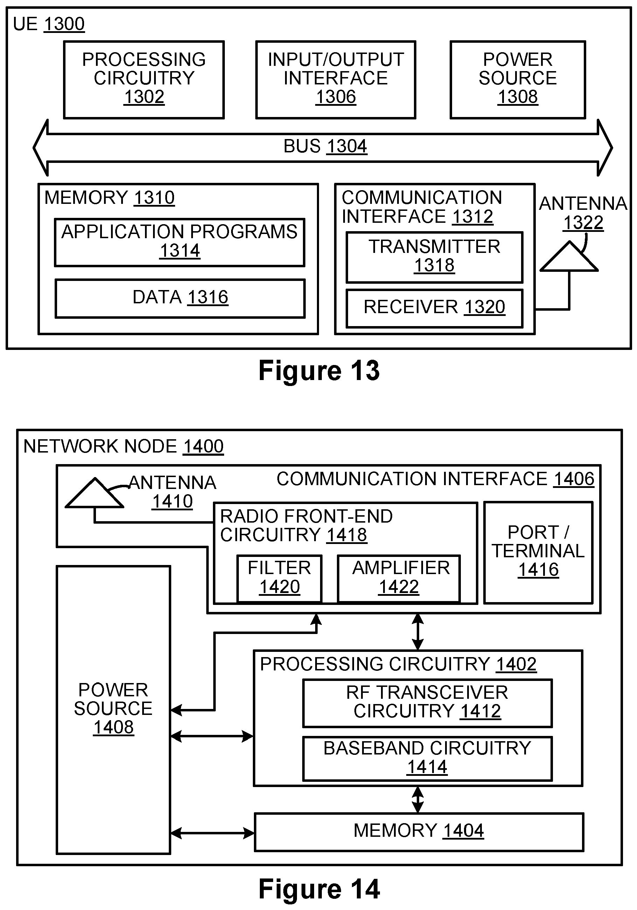

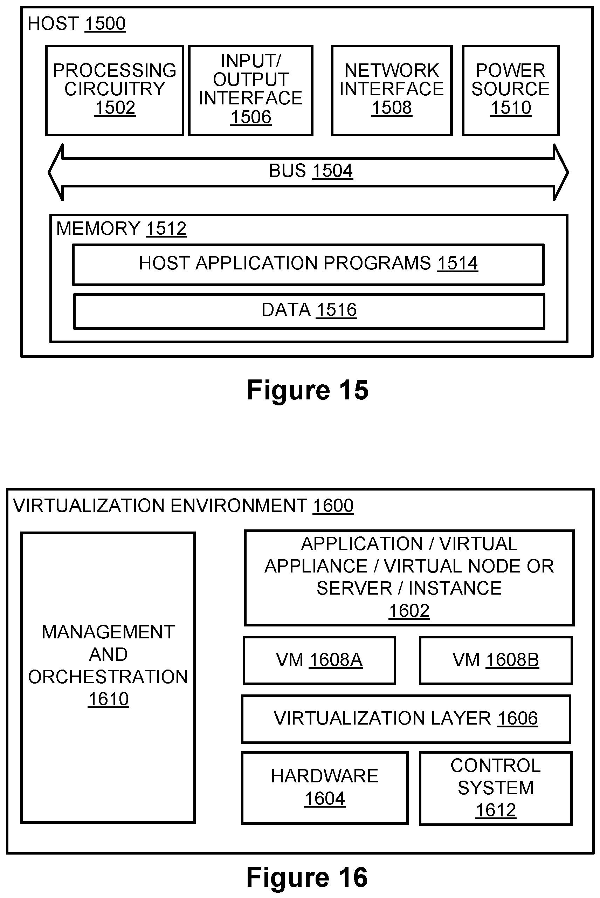

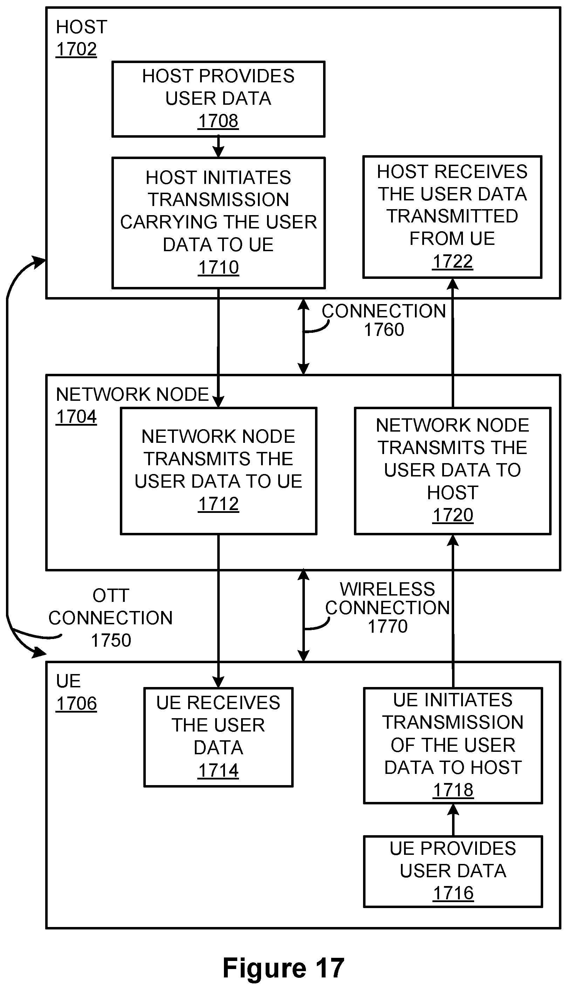

Figure 6 is a block diagram illustrating elements of a communication device UE 600 (also referred to as a mobile terminal, a mobile communication terminal, a wireless device, a wireless communication device, a wireless terminal, mobile device, a device, a wireless communication terminal, user equipment, UE, a user equipment node/terminal/device, etc.) configured to provide wireless communication according to embodiments of inventive concepts. (Communication device 600 may be provided, for example, as discussed below with respect to wireless devices UE 1212A, UE 1212B, and wired or wireless devices UE 1212C, UE 1212D of Figure 12, UE 1300 of Figure 13, virtualization hardware 1604 and virtual machines 1608A, 1608B of Figure 16, and UE 1706 of Figure 17, all of which should be considered interchangeable in the examples and embodiments described herein and be within the intended scope of this disclosure, unless otherwise noted.) As shown, communication device UE may include one or more antenna(s) (e.g., corresponding to antenna 1322 of Figure 13), and transceiver circuitry 601 (also referred to as a transceiver, e.g., corresponding to interface 1312 of Figure 13 having transmitter 1318 and receiver 1320) including a transmitter and a receiver configured to provide uplink and downlink radio communications with a base station(s) (e.g., corresponding to network node 1210A, 1210B of Figure 12, network node 1400 of Figure 14, and network node 1704 of Figure 17 also referred to as a RAN node) of a radio access network. Communication device UE may also include processing circuitry 603 (also referred to as a processor, e.g., corresponding to processing circuitry 1302 of Figure 13, and control system 1612 of Figure 16) coupled to the transceiver circuitry, and memory circuitry 605 (also referred to as memory, e.g., corresponding to memory 1310 of Figure 12) coupled to the processing circuitry. The memory circuitry 605 may include computer readable program code that when executed by the processing circuitry 603 causes the processing circuitry to perform operations according to embodiments disclosed herein. According to other embodiments, processing circuitry 603 may be defined to include memory so that separate memory circuitry is not required. Communication device UE may also include an interface (such as a user interface) coupled with processing circuitry 603, and/or communication device UE may be incorporated in a vehicle.

As discussed herein, operations of communication device UE may be performed by processing circuitry 603 and/or transceiver circuitry 601. For example, processing circuitry 603 may control transceiver circuitry 601 to transmit communications through transceiver circuitry 601 over a radio interface to a radio access network node (also referred to as a base station) and/or to receive communications through transceiver circuitry 601 from a RAN node over a radio interface. Moreover, modules may be stored in memory circuitry 605, and these modules may provide instructions so that when instructions of a module are executed by processing circuitry 603, processing circuitry 603 performs respective operations (e.g., operations discussed below with respect to Example Embodiments relating to wireless communication devices and wireless communication network nodes). According to some embodiments, a communication device UE 600 and/or an element(s)/function(s) thereof may be embodied as a virtual node/nodes and/or a virtual machine/machines. Various operations by the UE in accordance with embodiments of the present disclosure may be performed by discrete logic such as an application-specific integrated circuit (ASIC), which may include a field programmable gate array (FPGA), neural processing unit (NPU), etc., or may be performed by a central processing unit (CPU), a graphics processing unit (GPU), a line card, etc. The UE may contain a network node (e.g., PTP node) which is configured to operate in accordance with one or more embodiment disclosed herein, such as in accordance with any of the flowcharts of Figures 9-11.

Figure 7 is a block diagram illustrating elements of a radio access network RAN node 700 (also referred to as a network node, base station, eNodeB/eNB, gNodeB/gNB, etc.) of a Radio Access Network (RAN) configured to provide cellular communication according to embodiments of inventive concepts. (RAN node 700 may be provided, for example, as discussed below with respect to network node 1210A, 1210B of Figure 12, network node 1400 of Figure 14, hardware 1604 or virtual machine 1608A, 1608B of Figure 16, and/or base station 1704 of Figure 17, all of which should be considered interchangeable in the examples and embodiments described herein and be within the intended scope of this disclosure, unless otherwise noted.) As shown, the RAN node may include transceiver circuitry 701 (also referred to as a transceiver, e.g., corresponding to portions of RF transceiver circuitry 1412 and radio front end circuitry 1418 of Figure 14) including a transmitter which transmits through one or more antenna(s) 640 (e.g., MIMO configured plurality of antennas) and a receiver configured to provide uplink and downlink radio communications with mobile terminals. The RAN node may include network interface circuitry 707 (also referred to as a network interface, e.g., corresponding to portions of communication interface 1406 of Figure 14) configured to provide communications with other nodes (e.g., with other base stations) of the RAN and/or core network CN. The network node may also include processing circuitry 703 (also referred to as a processor, e.g., corresponding to processing circuitry 1402 of Figure 14) coupled to the transceiver circuitry, and memory circuitry 705 (also referred to as memory, e.g., corresponding to memory 1404 of Figure 14) coupled to the processing circuitry. The memory circuitry 605 may include computer readable program code that when executed by the processing circuitry 603 causes the processing circuitry to perform operations according to embodiments disclosed herein. According to other embodiments, processing circuitry 703 may be defined to include memory so that a separate memory circuitry is not required. Various operations by the RAN node in accordance with embodiments of the present disclosure may be performed by discrete logic such as a FPGA. The RAN node may contain a network node (e.g., PTP node) which is configured to operate in accordance with one or more embodiment disclosed herein, such as in accordance with any of the flowcharts of Figures 9-11.

As discussed herein, operations of the RAN node may be performed by processing circuitry 703, network interface 707, and/or transceiver 701. For example, processing circuitry 703 may control transceiver 701 to transmit downlink communications through transceiver 701 over a radio interface to one or more mobile terminals UEs and/or to receive uplink communications through transceiver 701 from one or more mobile terminals UEs over a radio interface. Similarly, processing circuitry 703 may control network interface 707 to transmit communications through network interface 707 to one or more other network nodes and/or to receive communications through network interface from one or more other network nodes. Moreover, modules may be stored in memory 705, and these modules may provide instructions so that when instructions of a module are executed by processing circuitry 703, processing circuitry 703 performs respective operations (e.g., operations discussed below with respect to Example Embodiments relating to RAN nodes). According to some embodiments, RAN node 700 and/or an element(s)/function(s) thereof may be embodied as a virtual node/nodes and/or a virtual machine/machines.

According to some other embodiments, a network node may be implemented as a core network CN node without a transceiver. In such embodiments, transmission to a wireless communication device UE may be initiated by the network node so that transmission to the wireless communication device UE is provided through a network node including a transceiver (e.g., through a base station or RAN node). According to embodiments where the network node is a RAN node including a transceiver, initiating transmission may include transmitting through the transceiver.

Figure 8 is a block diagram illustrating elements of a core network (CN) node 800 (e.g., an SMF (session management function) node, an AMF (access and mobility management function) node, etc.) of a communication network configured to provide cellular communication according to embodiments of inventive concepts. (CN node 800 may be provided, for example, as discussed below with respect to core network node 1208 of Figure 12, hardware 1604 or virtual machine 1608A, 1608B of Figure 16, all of which should be considered interchangeable in the examples and embodiments described herein and be within the intended scope of this disclosure, unless otherwise noted) As shown, the CN node may include network interface circuitry 807 configured to provide communications with other nodes of the core network and/or the radio access network RAN. The CN node may also include a processing circuitry 803 (also referred to as a processor,) coupled to the network interface circuitry, and memory circuitry 805 (also referred to as memory) coupled to the processing circuitry. The memory circuitry 805 may include computer readable program code that when executed by the processing circuitry 803 causes the processing circuitry to perform operations according to embodiments disclosed herein. According to other embodiments, processing circuitry 803 may be defined to include memory so that a separate memory circuitry is not required.

As discussed herein, operations of the CN node 800 may be performed by processing circuitry 803 and/or network interface circuitry 807. For example, processing circuitry 803 may control network interface circuitry 807 to transmit communications through network interface circuitry 807 to one or more other network nodes and/or to receive communications through network interface circuitry from one or more other network nodes. Moreover, modules may be stored in memory 805, and these modules may provide instructions so that when instructions of a module are executed by processing circuitry 803, processing circuitry 803 performs respective operations (e.g., operations discussed below with respect to Example Embodiments relating to core network nodes). According to some embodiments, CN node 800 and/or an element(s)/function(s) thereof may be embodied as a virtual node/nodes and/or a virtual machine/machines. Various operations by the CN node 800 in accordance with the present disclosure may be performed by discrete logic such as a FPGA. The CN node 800 may contain a PTP network node which is configured to operate in accordance with one or more embodiment disclosed herein, such as in accordance with any of the flowcharts of Figures 9-11.

In the description herein, while the communication device may be any of the communication device 600, wireless device 1212A, 1212B, wired or wireless devices UE 1212C, UE 1212D, UE 1300, virtualization hardware 1604, virtual machines 1608A, 1608B, or UE 1706, the communication device shall be used to describe the functionality of the operations of the communication device. Operations of the communication device may be implemented according to one or more of the flowcharts of Figures 9-11 according to some embodiments of inventive concepts. For example, modules may be stored in memory 605 of Figure 6, and these modules may provide instructions so that when the instructions of a module are executed by respective communication device processing circuitry 603, processing circuitry 603 performs respective operations of the flow chart. Alternatively or additionally, the operations may be implemented in a FPGA or other digital logic device.

In the description herein, while the network node may be any of the RAN node 700, network node 1210A, 1210B, 1400, 1706, hardware 1604, or virtual machine 1608A, 1608B, the RAN node 700 shall be used to describe the functionality of the operations of the network node. Operations of the RAN node 700 may be implemented according to one or more of the flowcharts of Figures 9-11 according to some embodiments of inventive concepts. For example, modules may be stored in memory 705 of Figure 7, and these modules may provide instructions so that when the instructions of a module are executed by respective RAN node processing circuitry 703, processing circuitry 703 performs respective operations of the flow chart. Alternatively or additionally, the operations may be implemented in a FPGA or other digital logic device.

In the description herein, while the core network node may be any of the core network node 800, core network node 1208, hardware 1604, or virtual machine 1608A, 1608B, the core network node 800 shall be used to describe the functionality of the operations of the network node. Operations of the Core Network CN node 800 may be implemented according to one or more of the flowcharts of Figures 9-11 according to some embodiments of inventive concepts. For example, modules may be stored in memory 805 of Figure 8, and these modules may provide instructions so that when the instructions of a module are executed by respective CN node processing circuitry 803, processing circuitry 803 performs respective operations of the flow chart. Alternatively or additionally, the operations may be implemented in a FPGA or other digital logic device.

Figure 12 shows an example of a communication system 1200 in accordance with some embodiments.

In the example, the communication system 1200 includes a telecommunication network 1202 that includes an access network 1204, such as a radio access network (RAN), and a core network 1206, which includes one or more core network nodes 1208. The access network 1204 includes one or more access network nodes, such as network nodes 1210a and 1210b (one or more of which may be generally referred to as network nodes 1210), or any other similar 3rd Generation Partnership Project (3GPP) access node or non-3GPP access point. The network nodes 1210 facilitate direct or indirect connection of user equipment (UE), such as by connecting UEs 1212a, 1212b, 1212c, and 1212d (one or more of which may be generally referred to as UEs 1212) to the core network 1206 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1200 may include any number of wired or wireless networks, network nodes, UEs, and/or any other components or systems that may facilitate or participate in the communication of data and/or signals whether via wired or wireless connections. The communication system 1200 may include and/or interface with any type of communication, telecommunication, data, cellular, radio network, and/or other similar type of system.

The UEs 1212 may be any of a wide variety of communication devices, including wireless devices arranged, configured, and/or operable to communicate wirelessly with the network nodes 1210 and other communication devices. Similarly, the network nodes 1210 are arranged, capable, configured, and/or operable to communicate directly or indirectly with the UEs 1212 and/or with other network nodes or equipment in the telecommunication network 1202 to enable and/or provide network access, such as wireless network access, and/or to perform other functions, such as administration in the telecommunication network 1202.

In the depicted example, the core network 1206 connects the network nodes 1210 to one or more hosts, such as host 1216. These connections may be direct or indirect via one or more intermediary networks or devices. In other examples, network nodes may be directly coupled to hosts. The core network 1206 includes one more core network nodes (e.g., core network node 1208) that are structured with hardware and software components. Features of these components may be substantially similar to those described with respect to the UEs, network nodes, and/or hosts, such that the descriptions thereof are generally applicable to the corresponding components of the core network node 1208. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1216 may be under the ownership or control of a service provider other than an operator or provider of the access network 1204 and/or the telecommunication network 1202, and may be operated by the service provider or on behalf of the service provider. The host 1216 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1200 of Figure 12 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1202 is a cellular network that implements 3GPP standardized features. Accordingly, the telecommunications network 1202 may support network slicing to provide different logical networks to different devices that are connected to the telecommunication network 1202. For example, the telecommunications network 1202 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 1212 are configured to transmit and/or receive information without direct human interaction. For instance, a UE may be designed to transmit information to the access network 1204 on a predetermined schedule, when triggered by an internal or external event, or in response to requests from the access network 1204. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 1214 communicates with the access network 1204 to facilitate indirect communication between one or more UEs (e.g., UE 1212c and/or 1212d) and network nodes (e.g., network node 1210b). In some examples, the hub 1214 may be a controller, router, content source and analytics, or any of the other communication devices described herein regarding UEs. For example, the hub 1214 may be a broadband router enabling access to the core network 1206 for the UEs. As another example, the hub 1214 may be a controller that sends commands or instructions to one or more actuators in the UEs. Commands or instructions may be received from the UEs, network nodes 1210, or by executable code, script, process, or other instructions in the hub 1214. As another example, the hub 1214 may be a data collector that acts as temporary storage for UE data and, in some embodiments, may perform analysis or other processing of the data. As another example, the hub 1214 may be a content source. For example, for a UE that is a VR headset, display, loudspeaker or other media delivery device, the hub 1214 may retrieve VR assets, video, audio, or other media or data related to sensory information via a network node, which the hub 1214 then provides to the UE either directly, after performing local processing, and/or after adding additional local content. In still another example, the hub 1214 acts as a proxy server or orchestrator for the UEs, in particular in if one or more of the UEs are low energy IoT devices.

The hub 1214 may have a constant/persistent or intermittent connection to the network node 1210b. The hub 1214 may also allow for a different communication scheme and/or schedule between the hub 1214 and UEs (e.g., UE 1212c and/or 1212d), and between the hub 1214 and the core network 1206. In other examples, the hub 1214 is connected to the core network 1206 and/or one or more UEs via a wired connection. Moreover, the hub 1214 may be configured to connect to an M2M service provider over the access network 1204 and/or to another UE over a direct connection. In some scenarios, UEs may establish a wireless connection with the network nodes 1210 while still connected via the hub 1214 via a wired or wireless connection. In some embodiments, the hub 1214 may be a dedicated hub - that is, a hub whose primary function is to route communications to/from the UEs from/to the network node 1210b. In other embodiments, the hub 1214 may be a non-dedicated hub - that is, a device which is capable of operating to route communications between the UEs and network node 1210b, but which is additionally capable of operating as a communication start and/or end point for certain data channels.

Figure 13 shows a UE 1300 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1300 includes processing circuitry 1302 that is operatively coupled via a bus 1304 to an input/output interface 1306, a power source 1308, a memory 1310, a communication interface 1312, and/or any other component, or any combination thereof. Certain UEs may utilize all or a subset of the components shown in Figure 13. The level of integration between the components may vary from one UE to another UE. Further, certain UEs may contain multiple instances of a component, such as multiple processors, memories, transceivers, transmitters, receivers, etc.

The processing circuitry 1302 is configured to process instructions and data and may be configured to implement any sequential state machine operative to execute instructions stored as machine-readable computer programs in the memory 1310. The processing circuitry 1302 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1302 may include multiple central processing units (CPUs).

In the example, the input/output interface 1306 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1300. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1308 is structured as a battery or battery pack. Other types of power sources, such as an external power source (e.g., an electricity outlet), photovoltaic device, or power cell, may be used. The power source 1308 may further include power circuitry for delivering power from the power source 1308 itself, and/or an external power source, to the various parts of the UE 1300 via input circuitry or an interface such as an electrical power cable. Delivering power may be, for example, for charging of the power source 1308. Power circuitry may perform any formatting, converting, or other modification to the power from the power source 1308 to make the power suitable for the respective components of the UE 1300 to which power is supplied.

The memory 1310 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1310 includes one or more application programs 1314, such as an operating system, web browser application, a widget, gadget engine, or other application, and corresponding data 1316. The memory 1310 may store, for use by the UE 1300, any of a variety of various operating systems or combinations of operating systems.

The memory 1310 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1310 may allow the UE 1300 to access instructions, application programs and the like, stored on transitory or non-transitory memory media, to off-load data, or to upload data. An article of manufacture, such as one utilizing a communication system may be tangibly embodied as or in the memory 1310, which may be or comprise a device-readable storage medium.

The processing circuitry 1302 may be configured to communicate with an access network or other network using the communication interface 1312. The communication interface 1312 may comprise one or more communication subsystems and may include or be communicatively coupled to an antenna 1322. The communication interface 1312 may include one or more transceivers used to communicate, such as by communicating with one or more remote transceivers of another device capable of wireless communication (e.g., another UE or a network node in an access network). Each transceiver may include a transmitter 1318 and/or a receiver 1320 appropriate to provide network communications (e.g., optical, electrical, frequency allocations, and so forth). Moreover, the transmitter 1318 and receiver 1320 may be coupled to one or more antennas (e.g., antenna 1322) and may share circuit components, software or firmware, or alternatively be implemented separately.

In the illustrated embodiment, communication functions of the communication interface 1312 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1312, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 1300 shown in Figure 13.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 14 shows a network node 1400 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1400 includes a processing circuitry 1402, a memory 1404, a communication interface 1406, and a power source 1408. The network node 1400 may be composed of multiple physically separate components (e.g., a NodeB component and a RNC component, or a BTS component and a BSC component, etc.), which may each have their own respective components. In certain scenarios in which the network node 1400 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1400 may be configured to support multiple radio access technologies (RATs). In such embodiments, some components may be duplicated (e.g., separate memory 1404 for different RATs) and some components may be reused (e.g., a same antenna 1410 may be shared by different RATs). The network node 1400 may also include multiple sets of the various illustrated components for different wireless technologies integrated into network node 1400, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1400.

The processing circuitry 1402 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1400 components, such as the memory 1404, to provide network node 1400 functionality.

In some embodiments, the processing circuitry 1402 includes a system on a chip (SOC). In some embodiments, the processing circuitry 1402 includes one or more of radio frequency (RF) transceiver circuitry 1412 and baseband processing circuitry 1414. In some embodiments, the radio frequency (RF) transceiver circuitry 1412 and the baseband processing circuitry 1414 may be on separate chips (or sets of chips), boards, or units, such as radio units and digital units. In alternative embodiments, part or all of RF transceiver circuitry 1412 and baseband processing circuitry 1414 may be on the same chip or set of chips, boards, or units.

The memory 1404 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1402. The memory 1404 may store any suitable instructions, data, or information, including a computer program, software, an application including one or more of logic, rules, code, tables, and/or other instructions capable of being executed by the processing circuitry 1402 and utilized by the network node 1400. The memory 1404 may be used to store any calculations made by the processing circuitry 1402 and/or any data received via the communication interface 1406. In some embodiments, the processing circuitry 1402 and memory 1404 is integrated.

The communication interface 1406 is used in wired or wireless communication of signaling and/or data between a network node, access network, and/or UE. As illustrated, the communication interface 1406 comprises port(s)/terminal(s) 1416 to send and receive data, for example to and from a network over a wired connection. The communication interface 1406 also includes radio front-end circuitry 1418 that may be coupled to, or in certain embodiments a part of, the antenna 1410. Radio front-end circuitry 1418 comprises filters 1420 and amplifiers 1422. The radio front-end circuitry 1418 may be connected to an antenna 1410 and processing circuitry 1402. The radio front-end circuitry may be configured to condition signals communicated between antenna 1410 and processing circuitry 1402. The radio front-end circuitry 1418 may receive digital data that is to be sent out to other network nodes or UEs via a wireless connection. The radio front-end circuitry 1418 may convert the digital data into a radio signal having the appropriate channel and bandwidth parameters using a combination of filters 1420 and/or amplifiers 1422. The radio signal may then be transmitted via the antenna 1410. Similarly, when receiving data, the antenna 1410 may collect radio signals which are then converted into digital data by the radio front-end circuitry 1418. The digital data may be passed to the processing circuitry 1402. In other embodiments, the communication interface may comprise different components and/or different combinations of components.

In certain alternative embodiments, the network node 1400 does not include separate radio front-end circuitry 1418, instead, the processing circuitry 1402 includes radio front-end circuitry and is connected to the antenna 1410. Similarly, in some embodiments, all or some of the RF transceiver circuitry 1412 is part of the communication interface 1406. In still other embodiments, the communication interface 1406 includes one or more ports or terminals 1416, the radio front-end circuitry 1418, and the RF transceiver circuitry 1412, as part of a radio unit (not shown), and the communication interface 1406 communicates with the baseband processing circuitry 1414, which is part of a digital unit (not shown).

The antenna 1410 may include one or more antennas, or antenna arrays, configured to send and/or receive wireless signals. The antenna 1410 may be coupled to the radio front-end circuitry 1418 and may be any type of antenna capable of transmitting and receiving data and/or signals wirelessly. In certain embodiments, the antenna 1410 is separate from the network node 1400 and connectable to the network node 1400 through an interface or port.

The antenna 1410, communication interface 1406, and/or the processing circuitry 1402 may be configured to perform any receiving operations and/or certain obtaining operations described herein as being performed by the network node. Any information, data and/or signals may be received from a UE, another network node and/or any other network equipment. Similarly, the antenna 1410, the communication interface 1406, and/or the processing circuitry 1402 may be configured to perform any transmitting operations described herein as being performed by the network node. Any information, data and/or signals may be transmitted to a UE, another network node and/or any other network equipment.

The power source 1408 provides power to the various components of network node 1400 in a form suitable for the respective components (e.g., at a voltage and current level needed for each respective component). The power source 1408 may further comprise, or be coupled to, power management circuitry to supply the components of the network node 1400 with power for performing the functionality described herein. For example, the network node 1400 may be connectable to an external power source (e.g., the power grid, an electricity outlet) via an input circuitry or interface such as an electrical cable, whereby the external power source supplies power to power circuitry of the power source 1408. As a further example, the power source 1408 may comprise a source of power in the form of a battery or battery pack which is connected to, or integrated in, power circuitry. The battery may provide backup power should the external power source fail.

Embodiments of the network node 1400 may include additional components beyond those shown in Figure 14 for providing certain aspects of the network node's functionality, including any of the functionality described herein and/or any functionality necessary to support the subject matter described herein. For example, the network node 1400 may include user interface equipment to allow input of information into the network node 1400 and to allow output of information from the network node 1400. This may allow a user to perform diagnostic, maintenance, repair, and other administrative functions for the network node 1400.

Figure 15 is a block diagram of a host 1500, which may be an embodiment of the host 1216 of Figure 12, in accordance with various aspects described herein. As used herein, the host 1500 may be or comprise various combinations hardware and/or software, including a standalone server, a blade server, a cloud-implemented server, a distributed server, a virtual machine, container, or processing resources in a server farm. The host 1500 may provide one or more services to one or more UEs.

The host 1500 includes processing circuitry 1502 that is operatively coupled via a bus 1504 to an input/output interface 1506, a network interface 1508, a power source 1510, and a memory 1512. Other components may be included in other embodiments. Features of these components may be substantially similar to those described with respect to the devices of previous figures, such as Figures 13 and 14, such that the descriptions thereof are generally applicable to the corresponding components of host 1500.

The memory 1512 may include one or more computer programs including one or more host application programs 1514 and data 1516, which may include user data, e.g., data generated by a UE for the host 1500 or data generated by the host 1500 for a UE. Embodiments of the host 1500 may utilize only a subset or all of the components shown. The host application programs 1514 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1514 may also provide for user authentication and licensing checks and may periodically report health, routes, and content availability to a central node, such as a device in or on the edge of a core network. Accordingly, the host 1500 may select and/or indicate a different host for over-the-top services for a UE. The host application programs 1514 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 16 is a block diagram illustrating a virtualization environment 1600 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1600 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1602 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1604 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1606 (also referred to as hypervisors or virtual machine monitors (VMMs)), provide VMs 1608a and 1608b (one or more of which may be generally referred to as VMs 1608), and/or perform any of the functions, features and/or benefits described in relation with some embodiments described herein. The virtualization layer 1606 may present a virtual operating platform that appears like networking hardware to the VMs 1608.

The VMs 1608 comprise virtual processing, virtual memory, virtual networking or interface and virtual storage, and may be run by a corresponding virtualization layer 1606. Different embodiments of the instance of a virtual appliance 1602 may be implemented on one or more of VMs 1608, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1608 may be a software implementation of a physical machine that runs programs as if they were executing on a physical, non-virtualized machine. Each of the VMs 1608, and that part of hardware 1604 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1608 on top of the hardware 1604 and corresponds to the application 1602.

Hardware 1604 may be implemented in a standalone network node with generic or specific components. Hardware 1604 may implement some functions via virtualization. Alternatively, hardware 1604 may be part of a larger cluster of hardware (e.g. such as in a data center or CPE) where many hardware nodes work together and are managed via management and orchestration 1610, which, among others, oversees lifecycle management of applications 1602. In some embodiments, hardware 1604 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1612 which may alternatively be used for communication between hardware nodes and radio units.

Figure 17 shows a communication diagram of a host 1702 communicating via a network node 1704 with a UE 1706 over a partially wireless connection in accordance with some embodiments. Example implementations, in accordance with various embodiments, of the UE (such as a UE 1212a of Figure 12 and/or UE 1300 of Figure 13), network node (such as network node 1210a of Figure 12 and/or network node 1400 of Figure 14), and host (such as host 1216 of Figure 12 and/or host 1500 of Figure 15) discussed in the preceding paragraphs will now be described with reference to Figure 17.

Like host 1500, embodiments of host 1702 include hardware, such as a communication interface, processing circuitry, and memory. The host 1702 also includes software, which is stored in or accessible by the host 1702 and executable by the processing circuitry. The software includes a host application that may be operable to provide a service to a remote user, such as the UE 1706 connecting via an over-the-top (OTT) connection 1750 extending between the UE 1706 and host 1702. In providing the service to the remote user, a host application may provide user data which is transmitted using the OTT connection 1750.

The network node 1704 includes hardware enabling it to communicate with the host 1702 and UE 1706. The connection 1760 may be direct or pass through a core network (like core network 1206 of Figure 12) and/or one or more other intermediate networks, such as one or more public, private, or hosted networks. For example, an intermediate network may be a backbone network or the Internet.

The UE 1706 includes hardware and software, which is stored in or accessible by UE 1706 and executable by the UE's processing circuitry. The software includes a client application, such as a web browser or operator-specific "app" that may be operable to provide a service to a human or non-human user via UE 1706 with the support of the host 1702. In the host 1702, an executing host application may communicate with the executing client application via the OTT connection 1750 terminating at the UE 1706 and host 1702. In providing the service to the user, the UE's client application may receive request data from the host's host application and provide user data in response to the request data. The OTT connection 1750 may transfer both the request data and the user data. The UE's client application may interact with the user to generate the user data that it provides to the host application through the OTT connection 1750.

The OTT connection 1750 may extend via a connection 1760 between the host 1702 and the network node 1704 and via a wireless connection 1770 between the network node 1704 and the UE 1706 to provide the connection between the host 1702 and the UE 1706. The connection 1760 and wireless connection 1770, over which the OTT connection 1750 may be provided, have been drawn abstractly to illustrate the communication between the host 1702 and the UE 1706 via the network node 1704, without explicit reference to any intermediary devices and the precise routing of messages via these devices.

As an example of transmitting data via the OTT connection 1750, in step 1708, the host 1702 provides user data, which may be performed by executing a host application. In some embodiments, the user data is associated with a particular human user interacting with the UE 1706. In other embodiments, the user data is associated with a UE 1706 that shares data with the host 1702 without explicit human interaction. In step 1710, the host 1702 initiates a transmission carrying the user data towards the UE 1706. The host 1702 may initiate the transmission responsive to a request transmitted by the UE 1706. The request may be caused by human interaction with the UE 1706 or by operation of the client application executing on the UE 1706. The transmission may pass via the network node 1704, in accordance with the teachings of the embodiments described throughout this disclosure. Accordingly, in step 1712, the network node 1704 transmits to the UE 1706 the user data that was carried in the transmission that the host 1702 initiated, in accordance with the teachings of the embodiments described throughout this disclosure. In step 1714, the UE 1706 receives the user data carried in the transmission, which may be performed by a client application executed on the UE 1706 associated with the host application executed by the host 1702.

In some examples, the UE 1706 executes a client application which provides user data to the host 1702. The user data may be provided in reaction or response to the data received from the host 1702. Accordingly, in step 1716, the UE 1706 may provide user data, which may be performed by executing the client application. In providing the user data, the client application may further consider user input received from the user via an input/output interface of the UE 1706. Regardless of the specific manner in which the user data was provided, the UE 1706 initiates, in step 1718, transmission of the user data towards the host 1702 via the network node 1704. In step 1720, in accordance with the teachings of the embodiments described throughout this disclosure, the network node 1704 receives user data from the UE 1706 and initiates transmission of the received user data towards the host 1702. In step 1722, the host 1702 receives the user data carried in the transmission initiated by the UE 1706.

In an example scenario, factory status information may be collected and analyzed by the host 1702. As another example, the host 1702 may process audio and video data which may have been retrieved from a UE for use in creating maps. As another example, the host 1702 may collect and analyze real-time data to assist in controlling vehicle congestion (e.g., controlling traffic lights). As another example, the host 1702 may store surveillance video uploaded by a UE. As another example, the host 1702 may store or control access to media content such as video, audio, VR or AR which it can broadcast, multicast or unicast to UEs. As other examples, the host 1702 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1750 between the host 1702 and UE 1706, in response to variations in the measurement results. The measurement procedure and/or the network functionality for reconfiguring the OTT connection may be implemented in software and hardware of the host 1702 and/or UE 1706. In some embodiments, sensors (not shown) may be deployed in or in association with other devices through which the OTT connection 1750 passes; the sensors may participate in the measurement procedure by supplying values of the monitored quantities exemplified above, or supplying values of other physical quantities from which software may compute or estimate the monitored quantities. The reconfiguring of the OTT connection 1750 may include message format, retransmission settings, preferred routing etc.; the reconfiguring need not directly alter the operation of the network node 1704. Such procedures and functionalities may be known and practiced in the art. In certain embodiments, measurements may involve proprietary UE signaling that facilitates measurements of throughput, propagation times, latency and the like, by the host 1702. The measurements may be implemented in that software causes messages to be transmitted, in particular empty or 'dummy' messages, using the OTT connection 1750 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

Further definitions and embodiments are discussed below.

In the above description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the scope of invention defined by the appended claims.

## Claims

1. A method by a first network node, the method comprising:
generating (900) a first announcement indicating time stamping capabilities of the first network node;
sending (902) the first announcement to a second network node;
receiving (1000) a second announcement from the second network node indicating time stamping capabilities of the second network node;
comparing (1002) the time stamping capabilities of the first and second network nodes
based on the comparison (1002), communicating (1100) with the second network node to negotiate which of the respective time stamping capabilities will be used for time stamping communications between the first and second network nodes;
selecting (1102) which of the time stamping capabilities of the first and second network nodes will provide the least time stamping error relative to the other time stamping capabilities when used for time stamped communications between the first and second network nodes;
configuring (1104) the first network node to use the selected time stamping capability for the first network node; and
sending (1106) an indication of the selected time stamping capability for the second network node to the second network node.

2. The method of any of Claim 1, wherein the sending (902) of the first announcement to the second network node comprises:
embedding the first announcement in a type, length, value, TLV, field attached to a precision time protocol, PTP, message.

3. An application-specific integrated circuit of a first network node adapted to perform operations according to any of Claims 1 to 2.

4. A computer program comprising program code to be executed by processing circuitry of a first network node, whereby execution of the program code causes the first network node to perform operations according to any of Claims 1 to 2.

5. A non-transitory storage medium configured to store program code to be executed by processing circuitry of a first network node, whereby execution of the program code causes the first network node to perform operations according to any of Claims 1 to 2.

6. A first network node (700, 800) adapted to:
generate a first announcement indicating time stamping capabilities of the first network node;
send the first announcement to a second network node;
receive a second announcement from the second network node indicating time stamping capabilities of the second network node;
compare the time stamping capabilities of the first and second network nodes
based on the comparison, communicate with the second network node to negotiate which of the respective time stamping capabilities will be used for time stamping communications between the first and second network nodes;
select which of the time stamping capabilities of the first and second network nodes will provide the least time stamping error relative to the other time stamping capabilities when used for time stamped communications between the first and second network nodes;
configure the first network node to use the selected time stamping capability for the first network node; and
send an indication of the selected time stamping capability for the second network node to the second network node.

7. The first network node of any of Claim 6, wherein the sending of the first announcement to the second network node comprises:
embedding the first announcement in a type, length, value, TLV, field attached to a precision time protocol, PTP, message.

## Patentansprüche

1. Verfahren, das von einem ersten Netzwerkknoten durchgeführt wird, wobei das Verfahren Folgendes umfasst:
Erstellen (900) einer ersten Ankündigung, die Zeitstempelfähigkeiten des ersten Netzwerkknotens angibt;
Senden (902) der ersten Ankündigung an einen zweiten Netzwerkknoten;
Empfangen (1000) einer zweiten Ankündigung von dem zweiten Netzwerkknoten, die Zeitstempelfähigkeiten des zweiten Netzwerkknotens angibt;
Vergleichen (1002) der Zeitstempelfähigkeiten des ersten und des zweiten Netzwerkknotens,
basierend auf dem Vergleich (1002) Kommunizieren (1100) mit dem zweiten Netzwerkknoten, um auszuhandeln, welche der jeweiligen Zeitstempelfähigkeiten für Zeitstempelkommunikationen zwischen dem ersten und dem zweiten Netzwerkknoten verwendet werden;
Auswählen (1102), welche der jeweiligen Zeitstempelfähigkeiten des ersten und des zweiten Netzwerkknotens bei Verwendung für Zeitstempelkommunikationen zwischen dem ersten und dem zweiten Netzwerkknoten den geringsten Zeitstempelfehler relativ zu den anderen Zeitstempelfähigkeiten bereitstellen;
Konfigurieren (1104) des ersten Netzwerkknotens zum Verwenden der ausgewählten Zeitstempelfähigkeit für den ersten Netzwerkknoten; und
Senden (1106) einer Angabe der ausgewählten Zeitstempelfähigkeit für den zweiten Netzwerkknoten an den zweiten Netzwerkknoten.

2. Verfahren nach einem der Ansprüche 1, wobei das Senden (902) der ersten Ankündigung an den zweiten Netzwerkknoten Folgendes umfasst:
Einbetten der ersten Ankündigung in ein Typ-, Längen- und Wert-Feld, TLV-Feld, das an eine Präzisionszeitprotokollnachricht, PTP-Nachricht, angehängt ist.

3. Anwendungsspezifische integrierte Schaltung eines ersten Netzwerkknotens, die zum Durchführen von Operationen nach einem der Ansprüche 1 bis 2 ausgelegt ist.

4. Computerprogramm, umfassend Programmcode zur Ausführung durch Verarbeitungsschaltungsanordnung eines ersten Netzwerkknotens, wobei die Ausführung des Programmcodes den ersten Netzwerkknoten zum Durchführen von Operationen nach einem der Ansprüche 1 bis 2 veranlasst.

5. Nicht-transitorisches Speichermedium, das zum Speichern von Programmcode ausgelegt ist, der von Verarbeitungsschaltungsanordnung eines ersten Netzwerkknotens ausgeführt werden soll, wobei die Ausführung des Programmcodes den ersten Netzwerkknoten zum Durchführen von Operationen nach einem der Ansprüche 1 bis 2 veranlasst.

6. Erster Netzwerkknoten (700, 800), der zu Folgendem ausgelegt ist:
Erstellen einer ersten Ankündigung, die Zeitstempelfähigkeiten des ersten Netzwerkknotens angibt;
Senden der ersten Ankündigung an einen zweiten Netzwerkknoten;
Empfangen einer zweiten Ankündigung von dem zweiten Netzwerkknoten, die Zeitstempelfähigkeiten des zweiten Netzwerkknotens angibt;
Vergleichen der Zeitstempelfähigkeiten des ersten und des zweiten Netzwerkknotens,
basierend auf dem Vergleich Kommunizieren mit dem zweiten Netzwerkknoten, um auszuhandeln, welche der jeweiligen Zeitstempelfähigkeiten für Zeitstempelkommunikationen zwischen dem ersten und dem zweiten Netzwerkknoten verwendet werden;
Auswählen, welche der jeweiligen Zeitstempelfähigkeiten des ersten und des zweiten Netzwerkknotens bei Verwendung für Zeitstempelkommunikationen zwischen dem ersten und dem zweiten Netzwerkknoten den geringsten Zeitstempelfehler relativ zu den anderen Zeitstempelfähigkeiten bereitstellen;
Konfigurieren des ersten Netzwerkknotens zum Verwenden der ausgewählten Zeitstempelfähigkeit für den ersten Netzwerkknoten; und
Senden einer Angabe der ausgewählten Zeitstempelfähigkeit für den zweiten Netzwerkknoten an den zweiten Netzwerkknoten.

7. Erster Netzwerkknoten nach einem von Anspruch 6, wobei das Senden der ersten Ankündigung an den zweiten Netzwerkknoten Folgendes umfasst:
Einbetten der ersten Ankündigung in ein Typ-, Längen- und Wert-Feld, TLV-Feld, das an eine Präzisionszeitprotokollnachricht, PTP-Nachricht, angehängt ist.

## Revendications

1. Procédé par un premier nœud de réseau, le procédé comprenant :
la génération (900) d'une première annonce indiquant des capacités d'horodatage du premier nœud de réseau ;
l'envoi (902) de la première annonce à un deuxième nœud de réseau ;
la réception (1000) d'une deuxième annonce depuis le deuxième nœud de réseau indiquant des capacités d'horodatage du deuxième nœud de réseau ;
la comparaison (1002) des capacités d'horodatage des premier et deuxième nœuds de réseau ;
sur la base de la comparaison (1002), la communication (1100) avec le deuxième nœud de réseau pour négocier celle des capacités d'horodatage respectives qui sera utilisée pour des communications d'horodatage entre les premier et deuxième nœuds de réseau ;
la sélection (1102) de celle des capacités d'horodatage des premier et deuxième nœuds de réseau qui fournira l'erreur d'horodatage la plus faible par rapport aux autres capacités d'horodatage lors de son utilisation pour des communications horodatées entre les premier et deuxième nœuds de réseau ;
la configuration (1104) du premier nœud de réseau pour utiliser la capacité d'horodatage sélectionnée pour le premier nœud de réseau ; et
l'envoi (1106) d'une indication de la capacité d'horodatage sélectionnée pour le deuxième nœud de réseau au deuxième nœud de réseau.

2. Procédé selon la revendication 1, dans lequel l'envoi (902) de la première annonce au deuxième nœud de réseau comprend :
l'intégration de la première annonce dans un champ de type, longueur, valeur, TLV, joint à un message de protocole de temps de précision, PTP.

3. Circuit intégré spécifique à l'application d'un premier nœud de réseau adapté pour réaliser des opérations selon l'une quelconque des revendications 1 et 2.

4. Programme informatique comprenant un code de programme à exécuter par une circuiterie de traitement d'un premier nœud de réseau, une exécution du code de programme amenant le premier nœud de réseau à réaliser des opérations selon l'une quelconque des revendications 1 et 2.

5. Support de stockage non transitoire configuré pour stocker un code de programme à exécuter par une circuiterie de traitement d'un premier nœud de réseau, une exécution du code de programme amenant le premier nœud de réseau à réaliser des opérations selon l'une quelconque des revendications 1 et 2.

6. Premier nœud de réseau (700, 800) adapté pour :
générer une première annonce indiquant des capacités d'horodatage du premier nœud de réseau ;
envoyer la première annonce à un deuxième nœud de réseau ;
recevoir une deuxième annonce depuis le deuxième nœud de réseau indiquant des capacités d'horodatage du deuxième nœud de réseau ;
comparer les capacités d'horodatage des premier et deuxième nœuds de réseau ;
sur la base de la comparaison, communiquer avec le deuxième nœud de réseau pour négocier celle des capacités d'horodatage respectives qui sera utilisée pour des communications d'horodatage entre les premier et deuxième nœuds de réseau ;
sélectionner celle des capacités d'horodatage des premier et deuxième nœuds de réseau qui fournira l'erreur d'horodatage la plus faible par rapport aux autres capacités d'horodatage lors de son utilisation pour des communications horodatées entre les premier et deuxième nœuds de réseau ;
configurer le premier nœud de réseau pour utiliser la capacité d'horodatage sélectionnée pour le premier nœud de réseau ; et
envoyer une indication de la capacité d'horodatage sélectionnée pour le deuxième nœud de réseau au deuxième nœud de réseau.

7. Premier nœud de réseau selon la revendication 6, dans lequel l'envoi de la première annonce au deuxième nœud de réseau comprend :
l'intégration de la première annonce dans un champ de type, longueur, valeur, TLV, joint à un message de protocole de temps de précision, PTP.
